# EUROPEAN PATENT SPECIFICATION

(11) **EP 3 579 529 B1**
(45) Date of publication and mention of the grant of the patent: **11.11.2020**
(21) Application number: 17835448.6
(22) Date of filing: 31.03.2017
(51) Int. Cl.: H04M 1/02, H04M 1/22

(54) **INTELLIGENT LIGHT GUIDE BATTERY COVER AND MOBILE TERMINAL**
INTELLIGENTE LICHTLEITERBATTERIEABDECKUNG UND MOBILES ENDGERÄT
COUVERCLE INTELLIGENT DE BATTERIE DE GUIDE DE LUMIÈRE ET TERMINAL MOBILE

(30) Priority: 03.02.2017 CN 201710063436
(43) Date of publication of application: 11.12.2019
(73) Proprietor: JRD Communication (Shenzhen) Ltd, Shenzhen, Guangdong 518052 (CN)
(72) Inventor: HU, Zhiguo, Shenzhen, Guangdong 518052 (CN); SU, Dongshui, Shenzhen, Guangdong 518052 (CN); YE, Benzhi, Shenzhen, Guangdong 518052 (CN); CHENG, Huajun, Shenzhen, Guangdong 518052 (CN); HOU, Ruilin, Shenzhen, Guangdong 518052 (CN); LIN, Xieyuan, Shenzhen, Guangdong 518052 (CN)
(74) Representative: de Arpe Fernandez, Manuel
(86) International application number: PCT/CN2017/079041
(87) International publication number: WO 2018/141131

(56) References cited:
- WO-A1-03/075548
- CN-U- 202 178 803
- CN-U- 202 977 260
- CN-U- 203 014 918
- CN-U- 204 442 446
- CN-U- 205 490 682
- CN-Y- 201 237 163
- KR-A- 20140 062 225
- KR-A- 20150 039 031

## Description

### TECHNICAL FIELD

Embodiments of the present disclosure generally relate to battery cover technology, and in particular relate to a smart light guide battery cover and a mobile terminal.

### BACKGROUND

Light guide films have already been designed and used in many applications, such as lights of icons on touch screens of smartphones, keypads of feature phones, smart bracelets, tablet computers, and the like. However, at present, there has never been any design to apply the light guide films to smart battery covers, and thus it is impossible to meet personalized demands of users for achieving light guide of the battery covers.

KR20140062225A discloses a mobile terminal including: a main body case; a battery cover which is detachably formed in the back side of the main body case and has an aperture; a main printed circuit board which is formed inside of the main body case; and a power supply terminal which is mounted in the main printed circuit board, is exposed to the outside of the backside of the main body case and receives power from the battery. The battery cover comprises: a light guide film which is inserted into the aperture or is arranged in the inner side of the battery cover to overlap the aperture for emitting light to the outside through the aperture; a light source which is arranged in one side of the light guide film for emitting light into the light guide film; and a power reception terminal which is in contact with the power supply terminal when the battery cover is engaged with the main body case and transmits the power to the light source when being electrically connected to the light source and being in contact with the power supply terminal.

KR20150039031A discloses a mobile terminal having a rear surface lighting structure. The mobile terminal disclosed in the document comprises a light emitting device installed inside a terminal body; a battery cover including a pattern part formed with a transparent light guiding plate to diffuse the received light to the rear surface of the terminal body, and formed with preset pattern for some areas among an entire area to be lighted and for remaining areas to be shaded; and a light guiding part formed for at least one part to face the light emitting device, and delivering light emitted from the light emitting device to the battery cover to light the rear surface of the terminal body in the preset pattern.

WO03/075548A1 discloses a wireless communication terminal having a user exchangeable cover part. The wireless communication terminal and user exchangeable cover part are electrically interconnected by means of an electrical connector. The user exchangeable cover part comprises identification means. The user exchangeable cover part has an electric circuitry for supporting a user interface of the wireless terminal. The wireless terminal identifies the user exchangeable cover part by detecting the identification means. The wireless terminal operates the electric circuitry of the user exchangeable cover part independently of the identification of user exchangeable cover part.

Therefore, the technical solution in the prior art needs to be developed and improved. The present invention can improve the appearance of a mobile terminal by making a part of the back side of the mobile terminal with a predetermined pattern.

### SUMMARY

Aiming at defects in the prior art described above, the objective of the present disclosure is to provide a smart light guide battery cover and a mobile terminal, which solve the technical problems in the prior art that there has never been any design to apply the light guide film on the smart battery cover, and it is impossible to meet personalized demands of users for achieving light guide of the battery covers.

The technical solutions of the present disclosure are as follow.

According to one aspect of the invention, a smart light guide battery cover is provided. The smart light guide battery cover is arranged above a battery of a mobile terminal, and comprises: a plurality of LED lamps connected to the battery, a battery rear cover capable of transmitting light and comprising a body and a light transmitting structure arranged on the body, a light guide film arranged above the battery rear cover and the plurality of LED lamps, covering the battery rear cover and the plurality of LED lamps, and configured to guide the lights, and a transparent cover arranged above the light guide film. The light transmitting structure comprises a plurality of light transmitting holes formed on the body, and the plurality of LED lamps are arranged correspondingly in the plurality of light transmitting holes.

According to another aspect of the invention, a mobile terminal is further provided. The mobile terminal comprises the smart light guide battery cover described above.

The present disclosure may have the following advantages: a smart light guide battery cover and a mobile terminal are provided in the present disclosure. The smart light guide battery cover includes: a plurality of LED lamps connected to a battery, a battery rear cover arranged above the plurality of LED lamps and capable of transmitting lights, and a light guide film arranged above the battery rear cover and configured to guide the lights. In the present disclosure, the light guide film is applied to the smart battery cover for the first time, and thus the battery cover may achieve the light guiding effect, meeting the personalized demands of the customer.

### BRIEF DESCRIPTION OF THE DRAWINGS

FIG. 1 is an exploded view of a smart light guide battery cover of one embodiment of the present disclosure (the LED light is blocked by the PCB board in the figure because of the angle).
FIG. 2 is a front view of the light guide film of one embodiment of the present disclosure.
FIG. 3 is a side view of the light guide film of one embodiment of the present disclosure.
FIG. 4 is a rear view of the light guide film of one embodiment of the present disclosure.
FIG. 5 is a rear view of a mobile phone equipped with the smart light guide battery cover of one embodiment of the present disclosure.
FIG. 6 is a cutaway view along line A-A in FIG. 5 (rotated by 90 degrees anticlockwise).
FIG. 7 is a front view of the mobile phone equipped with the smart light guide battery cover of one embodiment of the present disclosure.
FIG. 8 is a cutaway view along line B-B in FIG. 7.
FIG. 9 is a partially enlarged view of FIG. 8.

### DETAILED DESCRIPTION

A smart light guide battery cover and a mobile terminal are described in the present disclosure. In order to achieve the objective, the technical solution and the effects of the present disclosure more clearly and definitely, the present invention will be further described in detail with reference to the drawings and embodiments. It should be understood that, the embodiments described below are only used for explanation, not for limitation.

The smart light guide battery cover of the present disclosure may be arranged above a battery of the mobile phone including but not limited to a mobile phone, a tablet computer, and the like.

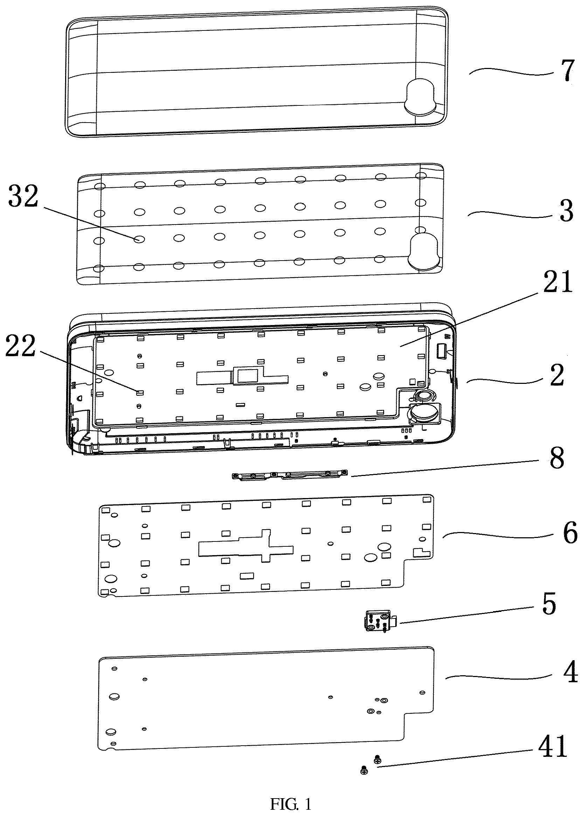

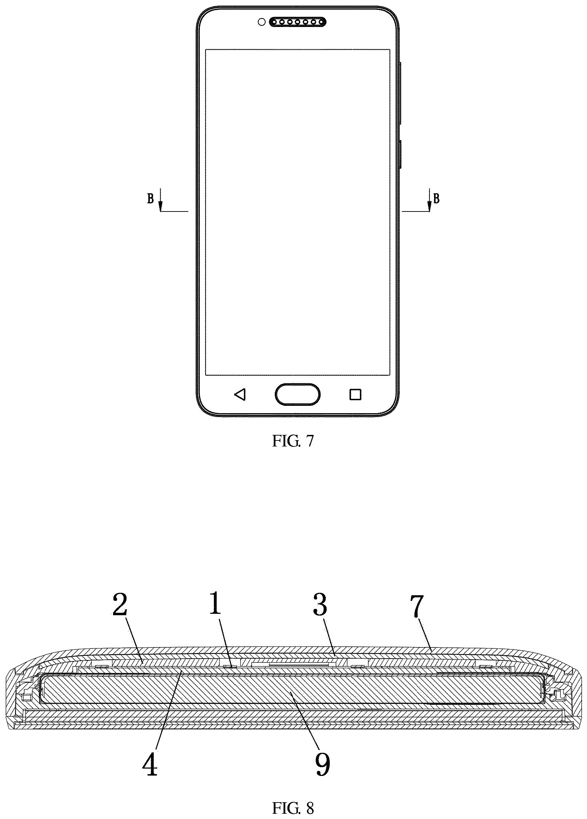

In one embodiment of the present disclosure, the mobile terminal is described, taking the mobile phone as an example. Referring to FIG. 1, FIG. 6 and FIG. 8, the smart light guide cover includes; a plurality of LED lamps 1 connected to a battery 9, a battery rear cover 2 arranged above the plurality of LED lamps 1 and capable of transmitting lights, and a light guide film 3 arranged above the battery rear cover 2 and configured to guide the lights. In the embodiment of the present disclosure, the battery rear cover 2 is namely the rear cover of the mobile phone.

Optionally, the light guide film of the present disclosure may be implemented as an ultrathin light guide film which may have a thickness of approximately 0.125mm. Compared with the light guide plate, the light guide film of the present disclosure may occupy smaller space, save LED lamps and power, and have good physical stability, good abrasive resistance, and long lifespan.

Furthermore, as is shown in FIG. 1, in one embodiment of the present disclosure, the battery rear cover 2 includes a body 21 and a light transmitting structure arranged on the body 21. According to the invention, the light transmitting structure includes a plurality of light transmitting holes 22 formed on the body 21. The plurality of LED lamps 1 are correspondingly arranged at lower parts of the plurality of light transmitting holes 22 arranged on the body 21.

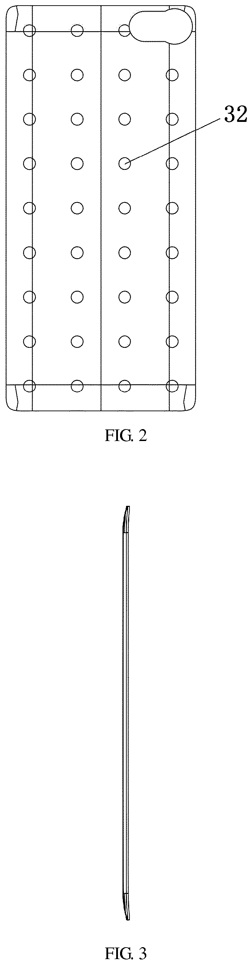

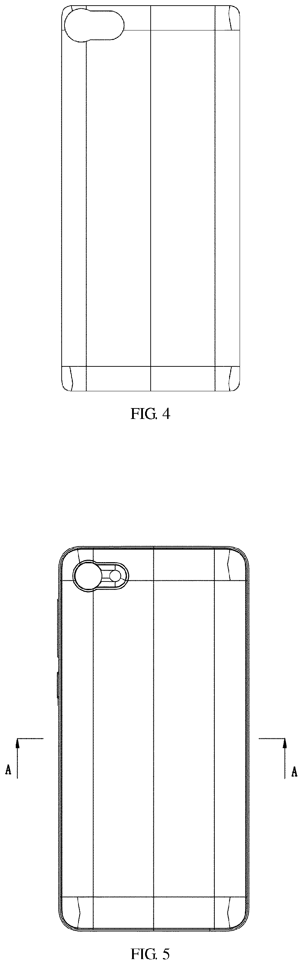

Furthermore, as is shown in FIG. 1, FIG. 2, FIG. 3 and FIG. 4, in one embodiment of the present disclosure, a plurality of light shielding films 32 may be arranged on the light guide film 3, and the plurality of light shielding films 32 may be correspondingly arranged on upper parts of the plurality of light transmitting holes 22. Since the plurality of LED lamps 1 may be quite close to the light guide film 3, the plurality of LED lamps 1 may be blocked by the battery rear cover 2 arranged on two sides of the plurality of LED lamps, and lights emitted by the plurality of LED lamps 1 may be normally incident into the light guide film 3. In this way, when adding the plurality of light shielding films 32 on normal incident positions of the plurality of LED lamps 1, parts of the lights may be refracted into the light guide film 3 at the plurality of light shielding films 32, and thus lights close to the plurality of LED lamps may be evenly diffused.

Furthermore, in one embodiment of the present disclosure, the smart light guide battery cover may further include a conductive structure (not labeled here) arranged at lower parts of the plurality of LED lamps 1 and configured to electrically connect the plurality of LED lamps 1 to the battery 9.

In specific, as is shown in FIG. 1, FIG. 5, FIG. 6 and FIG. 7, in one embodiment of the present disclosure, the conductive structure may include: a PCB board 4 configured to fix the plurality of LED lamps 1, and a Pogo pin assembly 5 arranged at a lower part of the PCB board 4 and configured to electrically connect the PCB board 4 to the battery 9.

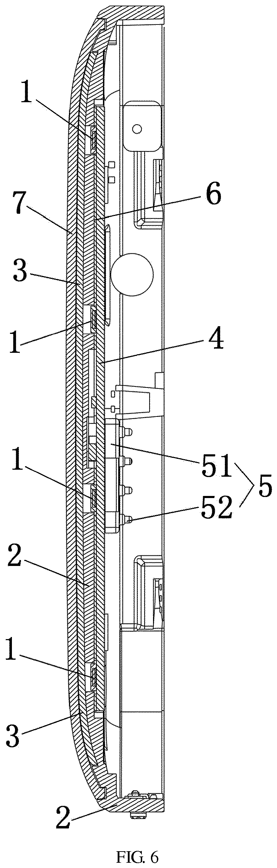

More specifically, as is shown in FIG. 6, in one embodiment of the present disclosure, the Pogo pin assembly 5 may include: a Pogo pin support 51 arranged at the lower part of the PCB board 4, and a plurality of Pogo pins 52 arranged on the Pogo pin support 51. The Pogo pin is namely POGO PIN, which is a kind of precise connector applied to electronic products such as mobile phone, and which is widely used in semiconductor devices for connection. The Pogo pin belongs to a technical solution of prior art, and will not be described in detail any more.

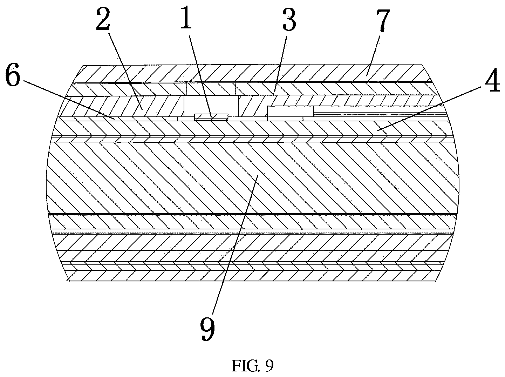

In specific, as is shown in FIG. 1, FIG. 6 and FIG. 9, in one embodiment of the present disclosure, the smart light guide battery cover may further include a foam 6 arranged between the PCB board 4 and the battery rear cover 2. The foam 6 may have functions of damping the battery, fixing the PCB board, and anti-vibrating, and may protect the battery and the PCB board as a result.

Furthermore, as is shown in FIG. 1, FIG. 6 and FIG. 8, in one embodiment of the present disclosure, the smart light guide battery cover may further include a transparent cover 7 arranged above the light guide film 3.

Optionally, in one embodiment of the present disclosure, the transparent cover 7 is an IML black transparent rear cover. IML (In Molding Label) is namely in-mold decoration process which may have the following significant features: a layer of hardened transparent thin film is positioned on the surface, a layer of plastic is positioned on the back, and a layer of printed pattern is sandwiched between the layer of hardened transparent thin film and the layer of plastic. Since printing ink is sandwiched in the middle between the layer of hardened transparent thin film and the layer of plastic in this embodiment, the surface of product may be prevented from being scratched; the product may have high frictional resistance, keep colors bright and not easily fade for a long period of time. When using the IML black transparent rear cover in the present disclosure, it is possible to achieve more gorgeous and colorful light guiding effect, and better meet personalized demands of users for diversification of light colors.

Furthermore, as is shown in FIG. 1, in one embodiment of the present disclosure, the smart light guide battery cover may further include a side key 8 (i.e., the side key of the mobile phone) assembled on the battery rear cover 2, and a bolt 41 configured to fix the Pogo pin support 51 on the PCB board 4.

In the embodiment of the present disclosure, the smart light guide battery cover may mainly comprise components such as the PCB board, the plurality of LED lamps, the light guide film, the Pogo Pin, the Pogo Pin support, the battery rear cover, the IML black transparent rear cover, the foam, and the like. The light guide film may be attached on the battery rear cover. The lights emitted from the plurality of LED lamps may be refracted to the light guide film, evenly diffused via the light guide film, passed through the IML black transparent rear cover, and finally diverged. In this way, it is possible to achieve a function of illumination.

In the present disclosure, the light guide film may be directly attached on the battery rear cover, and the components including the PCB board, the plurality of LED lamps, the Pogo Pin, and the like are connected to each other. In this way, the circuit may be keep conducted, and the battery cover may achieve the light guiding effect.

In the present disclosure, the light guide film is creatively applied to the smart battery cover, and thus the battery cover may achieve the light guiding effect, meeting the personalized demands of the customer, and may be the pioneering technology in the industry.

In another embodiment of the present invention, a mobile terminal is further provided. The mobile terminal includes the smart light guide battery cover described above. In this embodiment, the mobile terminal may include, but is not limited to, a mobile phone, a tablet computer, and the like.

In conclusion, the present invention provides a smart light guide battery cover and a mobile terminal. The smart light guide battery cover may include: a plurality of LED lamps connected to a battery, a battery rear cover arranged above the plurality of LED lamps and capable of transmitting lights, and a light guide film arranged above the battery rear cover and configured to guide the lights. In the present disclosure, the light guide film is applied to the smart battery cover for the first time, and thus the battery cover may achieve the light guiding effect, meeting the personalized demands of the customer.

It could be understood that, the application of the present disclosure is not limited to the embodiments described above. In fact, one skilled in the art may make many modifications based on the technical solutions and inventive concept of the present disclosure. All these modifications, as long as they fall under the scope of protection as defined by the appended claims, shall all be considered to be within the scope of the invention.

## Claims

1. A smart light guide battery cover, for being arranged above a battery (9) of a mobile terminal, the smart light guide battery cover comprising:
a plurality of LED lamps (1) connected to the battery (9),
a battery rear cover (2) capable of transmitting light and comprising a body (21) and a light transmitting structure arranged on the body (21), whereby the light transmitting structure comprises a plurality of light transmitting holes (22) formed on the body (21), and the plurality of LED lamps (1) are arranged correspondingly in the plurality of light transmitting holes (22);
whereby the smart light guide battery cover further comprises a light guide film (3) arranged above the battery rear cover (2) and the plurality of LED lamps (1), covering the battery rear cover (2) and the plurality of LED lamps (1), and configured to guide the light.

2. The smart light guide battery cover of claim 1, wherein a plurality of light shielding films (32) are arranged on the light guide film (3); the plurality of light shielding films (32) are correspondingly arranged on upper parts of the plurality of light transmitting holes (22) and covering the plurality of LED lamps (1) and the plurality of light transmitting holes (22), and the plurality of light shielding films (32) are configured to refract a portion of the light emitted from the plurality of LED lamps (1) into the light guide film (3).

3. The smart light guide battery cover of claim 1, further comprising a conductive structure arranged at lower parts of the plurality of LED lamps (1) and configured to electrically connect the plurality of LED lamps (1) to the battery (9).

4. The smart light guide battery cover of claim 3, wherein the conductive structure comprises a PCB board (4) configured to fix the plurality of LED lamps (1), and a Pogo pin assembly (5) arranged at a lower part of the PCB board (4) and configured to electrically connect the PCB board (4) to the battery (9).

5. The smart light guide battery cover of claim 3, further comprising a foam (6) arranged between the PCB board (4) and the battery rear cover (2).

6. The smart light guide battery cover of claim 1, further comprising a transparent cover (7) arranged above the light guide film (3).

7. The smart light guide battery cover of claim 3, wherein the Pogo pin assembly (5) comprises a Pogo pin support (51) arranged at the lower part of the PCB board (4), and a plurality of Pogo pins (52) arranged on the Pogo pin support (51).

8. The smart light guide battery cover of claim 1, wherein a projection of each of the plurality of LED lamps (1) projected on the battery rear cover (2) is located within the plurality of light transmitting holes (22).

9. A mobile terminal, comprising the smart light guide battery cover of any one of claims 1-8.

## Patentansprüche

1. Intelligente Lichtleiterbatterieabdeckung, die über der Batterie (9) eines mobilen Endgerät anzuordnen ist, wobei die intelligente Lichtleiterbatterieabdeckung Folgendes umfasst:
Eine Vielzahl von an die Batterie (9) angeschlossenen LED-Lampen (1),
eine hintere Batterieabdeckung (2), die in der Lage ist, Licht zu übertragen und die einen Körper (21) und eine Lichtübertragungsstruktur, die am Körper (21) angeordnet ist, umfasst wobei
die Lichtübertragungsstruktur eine Vielzahl von Lichtübertragungsöffnungen (22) aufweist, die am Körper (21) angeformt sind und dementsprechend ist die Vielzahl von LED-Lampen (1) in der Vielzahl von Lichtübertragungsöffnungen (22) angeordnet;
wobei
die intelligente Lichtleiterbatterieabdeckung weiter einen über der hinteren Batterieabdeckung (2) und der Vielzahl von LED-Lampen (1) angeordneten Lichtleiterfilm (3) umfasst, der die hintere Batterieabdeckung (2) und die Vielzahl von LED-Lampen (1) deckt und zur Leitung des Lichtes konfiguriert ist.

2. Die inteligente Lichtleiterbatterieabdeckung gemäss Anspruch 1, bei der eine Vielzahl von Lichtabschirmungsfilmen (32) auf dem Lichtleiterfilm (3) angeordnet ist; die Vielzahl von Lichtabschirmungsfilmen (32) ist entsprechend auf den Oberteilen der Vielzahl von Lichtübertragungsöffnungen (22) angeordnet und bedecken die Vielzahl von LED-Lampen (1) und die Vielzahl von Lichtübertragungsöffnungen (22) und die Vielzahl von Lichtabschirmungsfilmen (32) sind so konfiguriert, dass sie einen Teil des von der Vielzahl von LED-Lampen (1) ausgestrahlten Lichtes in den Lichtleiterfilm (3) ablenkt.

3. Die intelligente Lichtleiterbatterieabdeckung gemäss Anspruch 1, die weiter eine leitende Struktur umfasst, die am unteren Teil der Vielzahl von LED-Lampen (1) angeordnet und so konfiguriert ist, dass sie die Vielzahl von LED-Lampen (1) elektrisch mit der Batterie (9) verbindet.

4. Die inteligente Lichtleiterbatterieabdeckung gemäss Anspruch 3, bei der die leitende Struktur eine Leiterplatte (4) umfasst, die so konfiguriert ist, dass sie die Vielzahl der LED-Lampen (1) und eine am unteren Teil der Leiterplatte (4) angeordneten Pogo-Pin-Baugruppe (5) befestigt und ausgelegt ist, um elektrisch die Leiterplatte (4) mit der Batterie (9) zu verbinden.

5. Die intelligente Lichtleiterbatterieabdeckung gemäss Anspruch 3, die weiter einen zwischen der Leiterplatte (4) und der hinteren Batterieabdeckung (2) angeordneten Schaumkunststoff umfasst.

6. Die intelligente Lichtleiterbatterieabdeckung gemäss Anspruch 1, die weiter eine über dem Lichtleiterfilm (3) angeordnete duchsichtige Abdeckung (7) umfasst.

7. Die intelligente Lichtleiterbatterieabdeckung gemäss Anspruch 3, bei der die Pogo-Pin-Gruppe (5) ein Pogo-Pin-Stützelement (51), das am unteren Teil der Leiterplatte (4) angeordnet ist, und eine Vielzahl von an dem Pogo-Pin-Stützelement angeordneten Pogo-Pins (52) umfasst.

8. Die intelligente Lichtleiterbatterieabdeckung gemäss Anspruch 1, bei der eine Projektion von jeder der vielzähligen an der hinteren Batterieabdeckung (2) projektierten LED-Lampen (1) innerhalb der vielzähligen Lichtübertragungsöffnungen (22) lokalisiert ist.

9. Ein mobiles Endgerät, das die intelligente Lichtleiterbatterieabdeckung gemäss irgendeinem der Ansprüche 1-8 umfasst.

## Revendications

1. Un couvercle de batterie de guidage de lumière intelligent pour être disposé sur une batterie (9) d'un terminal mobile, le couvercle de batterie de guidage de lumière intelligent comprenant:
une série de lampes à DEL (1) connectées à la batterie (9);
un couvercle arrière de la batterie (2) capable de transmettre de la lumière et comprenant un corps (21) et une structure de transmission de lumière disposée sur le corps (21); où la structure de transmission de lumière comprend une série de trous de transmission de lumière (22) disposés sur le corps (21), et la série de lampes à DEL (1) sont disposées de manière correspondante sur la série de trous de transmission de lumière (22) ;
où
le couvercle de batterie de guidage de lumière intelligent comprend en outre un film de guidage de lumière (3) disposé sur le couvercle arrière de la batterie (2), et la série de lampes à DEL (1) couvrant le couvercle arrière de la batterie (2) et la série de lampes à DEL (1) sont configurés pour guider la lumière.

2. Le couvercle de batterie de guidage de lumière intelligent de la revendication 1, où une série de films de protection contre la lumière(32) sont disposés sur le film de guidage de lumière (3); la série de films de protection contre la lumière(32) sont disposés de manière correspondante sur les parties supérieures de la série de trous de transmission de lumière (22) et couvrant la série de lampes à DEL (1), et la série de trous de transmission de lumière (22) et la série de films de protection contre la lumière(32) sont configurés de manière à réfracter une portion de lumière émanant de la série de lampes à DEL (1) dans le film de guidage de lumière (3).

3. Le couvercle de batterie de guidage de lumière intelligent de la revendication 1, comprenant en outre une structure conductrice disposée sur les parties inférieures de la série de lampes à DEL (1) et configurée pour connecter électriquement à la série de lampes à DEL (1) et à la batterie (9).

4. Le couvercle de batterie de guidage de lumière intelligent de la revendication 3, ou la structure conductrice comprend une carte PCB (4) configurée de manière à fixer la série de lampes à DEL (1) et un ensemble de broches Pogo (5) disposées sur la partie inférieure de la carte PCB (4) et configurées de manière à connecter électriquement la carte PCB à la batterie (9).

5. Le couvercle de batterie de guidage de lumière intelligent de la revendication 3, comprenant en outre une mousse (6) disposée entre la carte PCB (4) et le couvercle arrière de la batterie (2).

6. Le couvercle de batterie de guidage de lumière intelligent de la revendication 1, comprenant en outre un couvercle transparent (7) disposé sur le film de guidage de lumière (3).

7. Le couvercle de batterie de guidage de lumière intelligent de la revendication 3, où l'ensemble de broches Pogo (5) comprennent un support des broches Pogo (51) disposées sur la partie inférieure de la carte PCB (4) et une série de broches Pogo (52) disposées sur le support des broches Pogo (51).

8. Le couvercle de batterie de guidage de lumière intelligent de la revendication 1, où une projection de chacune de la série de lampes à DEL (1) projetées sur le couvercle arrière de la batterie (2) est située parmi la série de trous de transmission de lumière (22).

9. Un terminal mobile comprenant le couvercle de batterie de guidage de lumière intelligent de l'une quelconque des revendications 1-8.
